## Europäisches Patentamt
## European Patent Office
## Office européen des brevets

(11) Publication number: **0 174 065**
**B1**

(12)
# EUROPEAN PATENT SPECIFICATION

(45) Date of publication of patent specification: **02.11.89**

(51) Int. Cl.⁴: **A 01 C 1/08**, A 23 N 12/00

(21) Application number: **85304302.4**

(22) Date of filing: **17.06.85**

(54) **Plant disease treatment.**

(30) Priority: **16.06.84 GB 8415432**

(43) Date of publication of application:
**12.03.86 Bulletin 86/11**

(45) Publication of the grant of the patent:
**02.11.89 Bulletin 89/44**

(84) Designated Contracting States:
**AT BE CH DE FR GB IT LI LU NL SE**

(56) References cited:
**AU-A- 512 857**
**DE-C- 373 606**
**DE-C- 436 090**
**FR-A-2 400 840**
**GB-A- 871 272**

(73) Proprietor: **ABERDEEN BIO-TECH LIMITED**
**6/7 Bon-Accord Crescent**
**Aberdeen, Scotland (GB)**

(72) Inventor: **Melvin, James Stewart**
**50 Skene Terrace**
**Aberdeen Scotland (GB)**
Inventor: **Mackay, James Murdoch**
**84 Broomhill Road**
**Aberdeen Scotland (GB)**

(74) Representative: **Szczuka, Jan Tymoteusz**
**Cruikshank & Fairweather 19 Royal Exchange**
**Square**
**Glasgow G1 3AE Scotland (GB)**

Courier Press, Leamington Spa, England.

# Description

The present invention relates to the treatment of plant diseases and in particular to the treatment of temperature sensitive diseases such as blackleg and softrot (caused by Erwinia Supp.) in potato tubers and other diseases in like plant matter.

The thermal treatment of tubers involves considerable problems due to the difficulty of effectively killing all or at least most of the disease organism infecting the tuber without at the same time significantly injuring the tuber tissue which is an important consideration where subsequent long-term storage of the tubers is required and even more important where the tubers are required for seed purposes.

FR—A—2,400,840 discloses an apparatus suitable for use in the treatment of tubers and/or other like vegetable material of generally similar form so as to control disease therein, which apparatus comprises a vessel having a water holding zone, an endless conveyor means formed and arranged for conveying said tubers or the like along a conveying path having a substantial portion within said water holding zone between conveyor loading station and a conveyor discharge station; and conveyor drive control means formed and arranged for controlling the speed of said conveyor means so as to determine the transit time between said loading and discharge stations thereby determining the residence time in said water holding zone, said conveyor means having tuber support and retaining means of generally open-work structural form so as to permit water flow therethrough to substantially all sides of said tubers, said conveyor means being further formed and arranged so as to tumble and/or roll said tubers at least along a substantial part of said conveyor path portion.

According to this prior publication though treatment of tubers and the like against disease and rotting is based essentially on the use of chemical solutions which is generally undesirable due to possible toxicity problems. The particular form of apparatus shown provides moreover only relatively limited tumbling and/or rolling of the tubers. Furthermore whilst FR—A—2,400,840 refers generally to diseases and rotting it does not refer in any way to the particular problems of providing effective treatment of the potato blackleg disease without damage to tubers.

DE—C—436—090 discloses an apparatus suitable for use in a low temperature (not above 45°C) fluid treatment of grain and lupins and also mentions the possibility of treating potatoes. The apparatus uses screw conveyors to agitate the grain but does not suggest the conveying of material to be treated along a predetermined conveying path to obtain a carefully controlled treatment of all parts of the material.

It is an object of the present invention to avoid or minimize one or more of the above problems and in particular to provide effective and economic methods and means of treating such diseases in tubers and like vegetable matter.

The present invention provides a method of treatment of potato blackleg in potato tubers comprising the steps of: grading potato tubers according to size, preferably to within a size variation of 20%, bringing size-graded potato tubers of a similar size, at a temperature at or below ambient temperature, preferably within the range from 4 to 30°C, most preferably from 4 to 20°C, to a thermal treatment zone; introducing said tubers into a body of thermal treatment fluid having a thermal capacity substantially larger than that of said introduced tubers such that said introduced tubers have a substantially negligible effect on the temperature of said fluid which fluid is at a temperature of from 45 to 65°C, preferably from 50 to 65°C, most preferably from 50 to 56°C, so as to substantially wholly surround the individual tubers with said fluid, and retaining said tubers in said fluid for a period of time sufficient to substantially kill the blackleg organism without significantly damaging the tuber tissue; withdrawing said tubers from said fluid and bringing them to a cooling zone; and preferably introducing said tubers into a cooling fluid at a temperature at or below ambient temperature, preferably below 20°C, most preferably below 10°C, in said cooling zone so as to substantially wholly surround the individual tubers in said cooling fluid, so as to rapidly cool said tubers to a temperature at or below ambient temperature, preferably below 20°C, most preferably below 10°C; and withdrawing said tubers from said cooling zone.

Where the thermal treatment fluid is water (including dilute aqueous solutions) the tubers are preferably immersed in said fluid for a period of from 30 seconds at a temperature in the region of 65°C to 10 minutes at a temperature in the region of 50°C.

The cooling step is preferably carried out so that said tubers are cooled to said temperature within a period of not more than 15 minutes, preferably from 4 to 12 minutes, e.g. 5 to 10 minutes. In practice it will often be sufficient to use ambient air, optionally with assisted flow, as the cooling fluid.

Desirably the thermal treatment is carried out under temperature and time conditions such that substantially only the outer, extra-vascular, region of the tuber is heated.

Advantageously the thermal treatment is carried out under temperature and time conditions such that the viability of the tuber with respect to sprouting is substantially unimpaired although in the case of ware tubers this is of course not essential.

With the method of the present invention it is possible to effectively control potato blackleg in a commercially acceptable manner without significantly impairing the quality of the tubers for ware purposes and/or for seed purposes.

Desirably the tubers are treated shortly after lifting, e.g. within 1 month, in order to minimise any development of disease in the tubers and to maximise viability especially in relation to sprouting. In practice though it has been found that the tubers may be successfully treated in accordance with the invention up to 3 months or even 6 months after lifting.

In a further aspect the present invention provides an apparatus suitable for use in the method of the present invention in the treatment of tubers and/or other like vegetable material of generally similar form, which apparatus comprises a vessel having a water holding zone, an endless conveyor means formed and arranged for conveying said tubers or the like along a conveying path having a substantial portion within said water holding zone between a conveyor loading station and a conveyor discharge station; and conveyor drive control means formed and arranged for controlling the speed of said conveyor means so as to determine the transit time between said loading and discharge stations thereby determining the residence time in said water holding zone, said conveyor means having tuber support and retaining means of generally open-work structural form so as to permit water flow therethrough to substantially all sides of said tubers, said conveyor means being further formed and arranged so as to tumble and/or roll said tubers at least along a substantial part of said conveyor path portion, characterised in that said apparatus is provided with water circulation means formed and arranged for circulating water, in use of said apparatus, so as to circulate water through said conveyor path portion, water heating means formed and arranged for heating, in use of the apparatus, said water being circulated and temperature control means formed and arranged for maintaining, in use of the apparatus, the temperature of said water at from 45 to 65o, preferably from 50 to 65°C.

Thus with an apparatus of the present invention it is possible to thermally treat tubers and the like against temperature sensitive diseases in a closely controlled manner such as to permit substantially complete and effective treatment on a continuous basis of large amounts of tubers without significant injury to the tissue of the tuber.

Conveniently the conveyor means is in the form of a wheel having axially outer annular end wall means and radially outward wall means, and a plurality of generally radially extending compartment defining wall means for defining a plurality of circumferentially disposed tuber holding compartments between said annular end wall means and radially outward wall means, and provided with radially inward wall means formed and arranged to retain said tubers within said compartments between said loading and discharge stations whilst permitting entry and exit, respectively,at said said stations.

The water circulation means may be in the form of one or more discrete units but could also be constituted by suitably disposed heating means whereby water circulation is effected by convection currents and/or by the conveyor means whereby water circulation is effected by movement of the water by the conveyor means during movement of the conveyor means.

Preferably the conveyor drive control means includes temperature sensor means formed and arranged for substantially continuously monitoring, in use, the temperature of the water during conveying of tubers therethrough, and is arranged for varying the speed of the conveyor means in a predetermined proportional relation to the temperature whereby the transit time of the tubers is varied in an inverse relation with respect to said temperatures.

Further preferred features and advantages cf the invention will appear from the following detailed description given by way of example of a preferred embodiment illustrated with reference to the accompanying drawings in which:

Fig. 1 is a generally schematic sectional elevation of a tuber treatment apparatus of the invention;

Fig. 2 is a detail transverse section of part of the conveyor means of the apparatus of Fig. 1; and

Figs. 3 and 4 are corresponding views of a second apparatus of the invention.

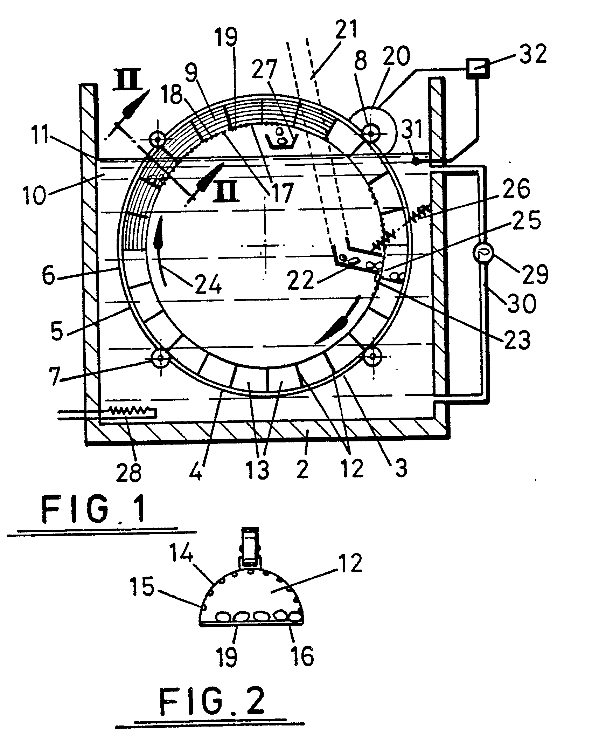

Fig. 1 shows an apparatus 1 suitable for use in the treatment of potato blackleg. The apparatus 1 comprises a thermally insulated tank 2 having mounted therein a conveyor means 3. The conveyor means 3 is in the form of a large wheel 4 having along its outer circumference 5 an outwardly facing general U-shaped section guide channel 6 engaged by a plurality of circumferentially spaced apart guide wheels 7 and one or more drive wheels 8. As may be seen in Figure 1, the wheel 4 is mounted in a vertical plane with a small outer portion 9 extending above a water holding zone 10 below the water level line 11.

In more detail the wheel 4 has a generally hemicylindrical section (see Fig. 2) and is subdivided by divider plates 12 which extend radially, into a plurality of tuber receiving compartments 13. The radially outer sides 14 of the compartments are defined substantially by a plurality of substantially spaced apart flexible elements such as plastic covered rope 15. The radially inner sides 16 of the compartments are partly open 17 and partly enclosed at the downstream ends 18 by a plurality of spaced apart axially extending elements 19 (note that the elements 15 and 19 of only some of the individual compartments are shown).

The drive motor 20 is connected by a suitable transmission means to the drive wheel 8 for rotating the wheel 4 clockwise (as viewed in Fig. 1). As may be seen in Fig. 1, the loading chute 21 extends downwardly into the water holding zone 10 to feed tubers 22 into the wheel, at a conveyor loading station 23 positioned so that the tubers fall gently into the compartments 13 and are retained therein, as the individual compartments traverse a conveyor path 24 through the water holding zone 10. In order to protect the tubers against physical damage by trapping between the axial elements 19 and the discharge end 25 of the chute 21, the latter is urged into its loading position by resilient biasing means 26 so that if a tuber should become trapped, the chute backs away from the wheel riding over the trapped tuber 22.

At the upper part of the wheel above the water· level line 11 is provided a discharge chute 27 which is mounted so as to catch tubers falling out of the compartments as these traverse the uppermost part of the conveyor path.

The tank 2 is also provided with water heating means, conveniently in the form of one or more immersion heaters 28 and water circulation means, for example a water pump 29 mounted in a water circulation conduit 30. It will be appreciated that the representation of the latter is somewhat schematic since it is important that the heating and circulation means should be arranged so as to provide an uniform and constant temperature (ca.52°C) in the water holding zone 10 and to maximise and make as uniform as possible the thermal transfer between the water and the tubers. Detailed arrangements may be readily determined by simple experiments.

The tank 2 is also provided with a temperature sensor 31 connected to a control means 32 for continuously monitoring the water temperature and varying the speed of the motor 20 in response thereto so as to adjust the tuber residence time in the water in accordance with any variance in temperature of the water, so as to ensure at all times an optimum thermal treatment of the tubers. Thus the motor needs to be readily and precisely adjustable in speed and in this connection a hydraulic motor or possibly a pneumatic motor, is found to be particularly suitable. It will be appreciated that as the tubers are carried round along the conveyor path 24 by the wheel 4 they are subjected to a gentle tumbling action and also to a continuous flow of water thereover thereby ensuring a substantially rapid and even thermal transfer between the water and the surface layer of the tuber.

The discharge conveyor 27 extends to a cooling apparatus (not shown) formed and arranged for rapid cooling of the tubers. Conveniently the cooling apparatus comprises tuber conveyor means, conveniently in the form of a pintle belt with upstanding rubber or other more or less soft resilient deformable fingers on which the tubers are supported as they pass through a cooling zone in which cold air is blown over and around them by suitable air flow induction means such as · fans to provide a rapid cooling and all-over drying of the tubers. Alternatively in order to achieve a possibly even more rapid cooling of the tubers these could be conveyed into a further apparatus substantially similar to that shown in fig. 1 in which, though, the water is maintained at a relatively low temperature e.g. 5°C, and the heating elements 28 are replaced by refrigeration elements. If required, the tubers could then be subsequently dried by blowing air over them.

Although the above apparatus has been described with reference to the treatment of potato tubers, it may also be used for the treatment of other vegetable matter such as for example bulbs and soft fruit such as apples. In addition, if desired for example in order to treat other diseases or parasitic contamination e.g.

infestation with nematodes, one or more chemical agents may be included in the water through which the tubers are conveyed.

It will also be appreciated that various modifications may be made to the above apparatus without departing frcm the scope of the present invention. Thus, for example, in order to minimise any substantial temperature gradients in the surface layer of the water which could prejudice the accurate control of the thermal treatment, additional thermal insulation could be provided, fcr example in the form of a layer of polystyrene beads or the like floating on the surface of the water. Also in order to maximise thermal efficiency, the wheel 4 is preferably constructed of materials having a relatively low thermal capacity in order to limit heat loss at the upper section of the conveyor path. Where the apparatus is to be used for smaller sized plant matter such as for example flower bulbs, then the mesh size of the compartment walls would need to be reduced.

It should incidentally be noted that where the plant matter is intended to be stored for any period of time prior to planting or consumption, then it is important that a drying step should be included for by one or more means as indicated above.

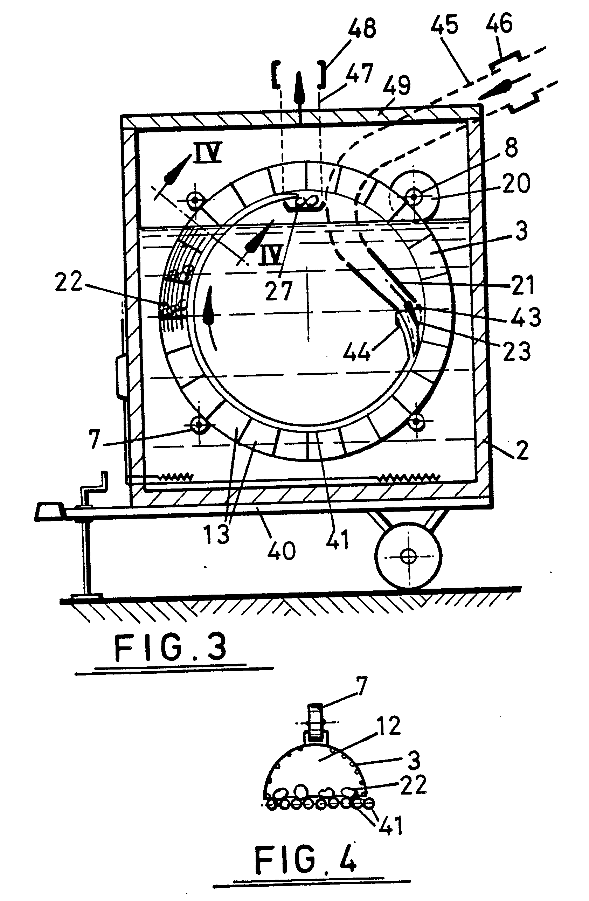

In Figs. 3 and 4 like parts corresponding to those in Figs. 1 and 2 have been identified by like reference indices. Also some items have been omitted to a greater or lesser extent for greater clarity.

In this case the tank 2 is mounted on a wheel chassis 40 suitable for towing by a motor vehicle so that the apparatus can be readily moved between different sites as required for use in treatment of tubers lifted at different places.

Also, the radially inner periphery of the wheel 3 is open and instead there is provided a fixed support in the form of a plurality of elongate arcuate round section elements 41 disposed in side-by-side relationship adjacent the radially inner edges 42 of the divider plates 12 of the wheel 3. Conveniently the elements 41 are in the form of tubes of a plastics material such as a polyamide or polypropylene which is relatively wear resistant and forms a low friction contact with the divider plates 12 which conveniently are made of rigid or semi-rigid rubber or plastics. This arrangement has been found to be particularly gentle on the tubers being treated.

As may be seen in Fig. 3 the fixed elements 41 are splayed out at one end 43 to form a hopper 44 for receiving tubers at the loading station 23 from the loading chute 21, and extend around the inner periphery of the wheel 3 in sliding contact with the divider plates 12 up to the discharge station 27, so as to define together with the wheel 3 a plurality of tuber receiving compartments 13.

The loading chute 21 is connected to a loading conveyor 45 (indicated schematically) which conveys the tubers 22 through a cleaning station 46 where any soil is removed to a greater or lesser extent in order to maximise thermal contact of the heated water 10 with the tuber itself during the thermal treatment. Conveniently the tubers are washed by spraying and/or immersion and desirably passed though a water bath in which they are subjected to ultrasonic radiation which assists in removal of the soil.

At the discharge station 27 there is provided a suitable belt conveyor 47 for conveying the thermally treated tubers to a cooling and optionally drying also, station 48. In practice it has been found that since tuber lifting is carried out in the Autumn, the tubers are cooled and dried sufficiently rapidly by passage along a short conveyor run of a few metres through ambient air so that they may be conveyed directly to a bagging station and cooling and drying allowed to continue naturally in the sacks especially where these are of hessian or like woven material. If desired there may be provided a mechanically assisted air flow through or across the discharge conveyor 47 downstream of the tank 2.

The tank 2 is normally provided with an insulated roof 49 to help maintain a uniform temperature and conserve energy. Suitable inlet and outlet openings, inspection hatches etc are provided as required and provided with suitable seals etc.

The drive system 20, 8 may be driven by any suitable means such as for example an electric or more conveniently a hydraulic motor to provide a suitable rate of rotation e.g. about ¼ r.p.m. to provide a residence time of 3 minutes in a typical arrangement using a 10 m³ capacity tank holding some 8 tonnes of water. This can achieve a treatment rate of the order of 3 tonnes of tubers per hour.

As maintained hereinabove the treatment water may include suitable chemicals for simultaneous treatment of other possible conditions such as potato gangrene (Phoma exigua), black scurf (Rhizoctonia solani), powdery scab (Spongospora subterranea) etc which might also be present.

Thus for example thiabendazole may be included in the treatment water.

As mentioned above the temperature and treatment time may be varied within the limits specified. Typical conditions which have been found satisfactorily maintained sprouting ability were 3 mins at 55°C and 5 mins at 52°C.

Advantageously filter means may be provided, conveniently in the water circulation means, for avoiding buildup of soil shed from the tubers in the tank. It may also be noted that where a longer treatment time e.g. up to 30 mins would be acceptable then a treatment temperature as low as 45°C could be used.

## Claims

1. An apparatus (1) suitable for use in the treatment of tubers (22) and/or other like vegetable material of generally similar form so as to control disease therein, which apparatus comprises a vessel (2) having a water holding zone (10), an endless conveyor means (3) formed and arranged for conveying said tubers (22) or the like along a conveying path having a substantial portion within said water holding zone (10) between a conveyor loading station (23) and a conveyor discharge station (27); and conveyor drive control means (20, 32) formed and arranged for controlling the speed of said conveyor means (3) so as to determine the transit time between said loading and discharge stations (23, 27) thereby determining the residence time in said water holding zone (10), said conveyor means (3) having tuber support and retaining means (14—19) of generally openwork structural form so as to permit water flow therethrough to substantially all sides of said tubers (22), said conveyor means (3) being further formed and arranged so as to tumble and/or roll said tubers (22) at least along a substantial part of said conveyor path portion, characterised in that said apparatus is provided with water circulation means (29) formed and arranged for circulating water, in use of said apparatus (1), so as to circulate water through said conveyor path portion, water heating means (28) formed and arranged for heating, in use of the apparatus, said water being circulated and temperature control means (28) formed and arranged maintaining, in use of the apparatus, the temperature of said water at from 45 to 65°C.

2. Apparatus according to claim 1 wherein is provided at an upstream end portion a soil removal zone (46) formed and arranged for cleaning of the tubers in use of the apparatus.

3. Apparatus according to claim 1 or claim 2 wherein said conveyor means is in the form of a wheel (4) having axially outer annular end wall means and radially outward wall means (15), and a plurality of generally radially extending compartment defining wall means (12) for defining a plurality circumferentially disposed tuber holding compartments (13) between said annular end wall means and radially outward wall means (15), and provided with radially inward wall means (16) formed and arranged to retain said tubers within said compartments between said loading and discharge stations (23, 27) whilst permitting entry and exit, respectively, at said stations (23, 27).

4. Apparatus according to claim 3 wherein said radially inward wall means is fixedly mounted so as to extend along the radially inward periphery of the wheel between said loading and discharge stations (23, 27) in sliding contact with said wheel (3).

5. Apparatus according to any one of claims 1 to 4 wherein the conveyor drive control means (32, 20, 8) includes temperature sensor means (31) formed and arranged for substantially continuously monitoring, in use, the temperature of the water during conveying of tubers (22) therethrough, and is arranged for varying the speed of the conveyor means (3) in a predetermined proportional relation to the temperature whereby the transit time of tubers (22) is varied in an inverse relation with respect to said temperature.

6. Apparatus according to claim 1 or claim 2 wherein said conveyor means is a vibrator type conveyor having a vibrator drive for vibration of said tuber support means and a conveying path formed and arranged so that the tubers are conveyed along said path under the influence of the weight of tubers (22) entering said path at said loading station (23) during operation of said vibrator drive.

7. Apparatus according to any of claims 1 to 6 wherein said temperature control means is formed and arranged for maintaining, in use of the apparatus, the temperature of said water at from 50 to 65°C.

8. A method of treatment of potato blackleg in potato tubers comprising the steps of: grading potato tubers (22) according to size, bringing size-graded potato tubers (22) of a similar size, at a temperature at or below ambient temperature, to a thermal treatment zone (10); introducing said tubers into a body of thermal treatment fluid having a thermal capacity substantially larger than that of said introduced tubers (22) such that said introduced tubers have a substantially negligible effect on the temperature of said fluid which fluid is at a temperature of from 45 to 65°C, so as to substantially wholly surround the individual tubers with said fluid, and retaining said tubers in said fluid for a period of time sufficient to substantially kill the blackleg organism without significantly damaging the tuber tissue; withdrawing said tubers from said fluid, and bringing them to a cooling zone.

9. A method according to claim 8 wherein said fluid is at a temperature of from 50 to 65°C.

10. A method according to claim 8 or claim 9 which includes the steps of introducing said tubers into a cooling fluid at a temperature at or below ambient temperature, in said cooling zone so as to substantially wholly surround the individual tubers in said cooling fluid, so as to rapidly cool said tubers to a temperature at or below ambient temperature, and withdrawing said tubers from said cooling zone.

11. A method according any of claims 8 to 10 wherein the tubers are immersed in an aqueous thermal treatment fluid for a period of from 30 seconds at a temperature in the region of 65°C to 10 minutes at a temperature in the region of 50°C.

12. A method according to any one of claims 8 to 11 wherein the thermal treatment is carried out under temperature and time conditions such that substantially only the outer, extra-vascular, region of the tuber is heated.

13. A method according to any one of claims 8 to 12 wherein the thermal treatment is carried out under temperature and time conditions such that the viability of the tuber with respect to sprouting is substantially un-impaired.

**Patentansprüche**

1. Vorrichtung (1) geeignet zu Verwendung bei der Behandlung von Fruchtknollen (22) und/oder anderem ähnlichen Gemüsematerial von im allgemeinen ähnlicher Form, um darin Krankheit einzudämmen, wobei die Vorrichtung einen Behälter (2) mit einer Wasser enthaltenenden Zone (10), ein Endlosfördermittel (3), das zum Fördern der Fruchtknollen (22) oder dergleichen entlang einer Förderbahn mit einem Hauptabschnitt innerhalb der Wasserenthaltezone (10) zwischen einer Fördererbeladestation (23) und einer Fördererentladestation (27) vorgesehen ist; und Fördererantriebssteuermittel (20, 32) aufweist, die zum Steuern der Geschwindigkeit des Fördermittels (3) vorgesehen sind, um die Durchlaufzeit zwischen der Belade- und Entladestation (23, 27) zu bestimmen, wodurch die Verweilzeit in der Wasserenthaltezone (10) bestimmt wird, wobei das Fördermittel (3) Fruchtknollenunterstützungs- und -aufnahmemittel (14-19) von im allgemeinen durchbrochener Strukturform aufweist, um den Wasserfluß hindurch zu im wesentlichen allen Seiten der Fruchtknollen (22) zu gewährleisten, das Fördermittel (3) weiterhin vorgesehen ist, um die Fruchtknollen (22) zumindest entlang eines wesentlichen Teils des Förderwegabschnittes umzuwälzen und/oder zu rollen, dadurch gekennzeichnet, daß die Vorrichtung mit Wasserumlaufmitteln (29), die zum Inumlaufbringen des Wassers vorgesehen sind, um bei Gebrauch der Vorrichtung (1) das Wasser durch den Förderwegabschnitt umzuwälzen, Wassererwärmungsmitteln (28), die bei Gebrauch der Vorrichtung zum Erwärmen des Wassers, das umgewälzt wird, vorgesehen sind, und Temperatursteuermitteln (28), die vorgesehen sind, bei Gebrauch der Vorrichtung die Temperatur des Wassers bei 45 bis 65°C aufrechtzuerhalten.

2. Vorrichtung nach Anspruch 1, dadurch gekennzeichnet, daß an einem stromaufwärtigen Endabschnitt eine Schmutzabführzone (46) angeordnet ist, die bei Gebrauch der Vorrichtung zum Reinigen der Fruchtknollen vorgesehen ist.

3. Vorrichtung nach Anspruch 1 oder Anspruch 2, dadurch gekennzeichnet, daß das Fördermittel in Form eines Rades (4) ausgebildet ist, das ein axiales äußeres ringförmiges Stirnwandmittel und sich nach außen erstreckende Wandmittel (15) und eine Anzahl sich im allgemeinen radial erstreckende Fächer begrenzende Wandmittel (12) zum Begrenzen einer Anzahl periphär angeordneter Fruchtknollenaufnahmefächer (13) zwischen dem ringförmigen Stirnwandmittel und den sich radial nach außen erstreckenden Wandmitteln (15) aufweist, und die mit sich radial nach innen erstreckenden Wandmitteln (16) versehen sind, die dazu bestimmt sind, die Fruchtknollen innerhalb der Fächer zwischen der Beladeund Entladestation (23, 27) bis zum Einfüllen und Ausgeben an den entsprechenden Stationen (23, 27) zu halten.

4. Vorrichtung nach Anspruch 3, dadurch gekennzeichnet, daß die sich radial nach innen erstreckenden Mittel starr befestigt sind, um sich entlang des radialen inneren Umfanges des Rades zwischen der Belade- und Entladestation (23, 27) in gleitender Berührung mit dem Rad (3) zu erstrecken.

5. Vorrichtung nach irgendeinem der Ansprüche 1 bis 4, dadurch gekennzeichnet, daß das Fördererantriebssteuermittel (32, 20, 8) ein Temperaturfühlermittel (31) aufweist, das im Gebrauch im wesentlichen zum kontinuierlichen Steuern der Temperatur des Wassers während des Förderns der Fruchtknollen hindurch vorgesehen ist, und das zum Verändern der Drehgeschwindigkeit des Fördermittels (3) in einem vorbestimmten proportionalen Verhältnis zur Temperatur angeordnet ist, wobei die Durchlaufzeit der Fruchtknollen (22) in einem inversen Verhältnis in bezug auf die Temperatur verändert wird.

6. Vorrichtung nach Anspruch 1 oder Anspruch 2, dadurch gekennzeichnet, daß das Fördermittel ein Vibratortypförderer ist, der einen Vibratorantrieb zur Vibration der Fruchtknollenaufnahmemittel und eine Förderbahn ausweist, die derart ausgebildet und angeordnet ist, daß die Fruchtknollen entlang der Bahn unter dem Einfluß des Gewichts der Fruchtknollen (22) gefördert werden, die in der Bahn an der Beladestation (23) während des Betriebes des Vibratorantriebes eingebracht werden.

7. Vorrichtung nach irgendeinem der Ansprüche 1 bis 6, dadurch gekennzeichnet, daß das Temperatursteuermittel vorgesehen ist, bei Gebrauch der Vorrichtung, die Temperatur des Wassers bei 50 bis 65°C aufrechtzuerhalten.

8. Verfahren zur Behandlung von Kartoffelbrand in Kartoffelknollen, ausweisend die Schritte: Sortieren der Kartoffelknollen (22) in bezug auf Größe; Einbringen der größensortierten Kartoffelknollen (22) von einer gleichen Größe in eine thermische Behandlungszone (10) bei einer Temperatur gleich oder unterhalb der Umgebungstemperatur; Einbringen der Fruchtknollen in einen Behälter thermischer Behandlungsflüssigkeit, die eine thermische Kapazität im wesentlichen größer als die der eingebrachten Fruchtknollen (22) aufweist, derart, daß die eingebrachten Fruchtknollen eine im wesentlichen vernachlässigbare Wirkung auf die Temperatur der Flüssigkeit haben, wobei die Flüssigkeit eine Temperatur von 45 bis 65°C hat, um im wesentlichen völlig die einzelnen Fruchtknollen mit der Flüssigkeit zu umgeben, und Zurückhalten der Fruchtknollen in der Flüssigkeit für eine hinreichende Zeitdauer, um im wesentlichen die Kartoffelbrandbakterien ohne bedeutende Schädigung des Fruchtknollengewebes abzutöten; Herausholen der Fruchtknollen aus der Flüssigkeit und Überführen dieser in eine Kühlzone.

9. Verfahren nach Anspruch 8, dadurch gekennzeichnet, daß die Flüssigkeit eine Temperatur von 50 bis 65°C aufweist.

10. Verfahren nach Anspruch 8 oder 9, das die Schritte des Einbringens der Fruchtknollen in eine Kühlflüssigkeit bei einer Temperatur bei oder unterhalb der Umgebungstemperatur einschließt, so daß in der Kühlzone die einzelnen Fruchtknollen im wesentlichen vollständig in der Kühlflüssigkeit umschlossen sind, um schnell die Fruchtknollen auf eine Temperatur bei oder unterhalb der Umgebungstemperatur abzukühlen, und Herausholen der Fruchtknollen aus der Kühlzone.

11. Verfahren nach irgendeinem der Ansprüche 8 bis 10, dadurch gekennzeichnet, daß die Fruchtknollen in eine wässrige thermische Behandlungsflüssigkeit für eine Dauer von etwa 30 Sekunden bei einer Temperatur im Bereich von etwa 65°C, bis 10 Minuten bei einer Temperatur im Bereich von 50°C untergetaucht sind.

12. Verfahren nach irgendeinem der Ansprüche 8 bis 11, dadurch gekennzeichnet, daß die thermische Behandlung mit geringeren Temperatur- und Zeitbedingungen durchgeführt wird, so daß im wesentlichen nur der äußere, extravaskulare, Bereich der Fruchtknollen erwärmt wird.

13. Verfahren nach irgendeinem der Ansprüche 8 bis 12, dadurch gekennzeichnet, daß die thermische Behandlung mit geringeren Temperatur- und Zeitbedingungen durchgeführt wird, so daß die Keimfähigkeit der Fruchtknollen in bezug auf das Keimen im wesentlichen unbeeinträchtigt bleibt.

**Revendications**

1. Dispositif (1) convenant pour être utilisé dans le traitement de tubercules (22) et/ou d'un autre élément végétal de forme semblable d'une manière générale, afin de contrôler une maladie de ces tubercules ou de cet élément végétal, lequel dispositif comporte une cuve (2) comportant une zone de retenue d'eau (10), des moyens (3) formant convoyeur sans fin, formés et agencés de manière à transporter lesdits tubercules (22) ou analogues le long d'une voie de transport, dont une partie importante se situe dans ladite zone de retenue d'eau (10) entre un poste de chargement (23) du convoyeur et un poste de déchargement (27) du convoyeur; et des moyens (20, 32) de commande de l'entraînement du convoyeur, formés et agencés de manière à commander la vitesse desdits moyens formant convoyeur (3) afin de déterminer le temps de transit entre lesdits postes de chargement et de déchargement (23, 27), afin de déterminer ainsi le temps de séjour dans ladite zone de retenue d'eau (10), lesdits moyens formant convoyeur (3) comportant des moyens (14—19) de soutien et de retenue des tubercules, possédant une configuration structurelle, qui d'une manière générale est ajourée, de manière à pouvoir être traversés par un écoulement d'eau essentiellement en direction de tous les côtés desdits tubercules (22), lesdits moyens formant convoyeurs (3) étant en outre formés et agencés de manière à faire culbuter et/ou rouler lesdits tubercules (22) au moins le long d'une longueur importante de ladite partie de la voie de transport, caractérisé en ce que ledit dispositif comporte des moyens (29) d'entraînement en circulation de l'eau formés et agencés pour faire circuler l'eau, lors de l'utilisation dudit dispositif (1), de manière à faire circuler l'eau dans ladite partie de la voie de transport, des moyens (28) de chauffage de l'eau formés et agencés de manière à chauffer, lors de l'utilisation du dispositif, ladite eau en circulation, et des moyens (28) de réglage de la température, formés et agencés de manière à maintenir, lors de l'utilisation du dispositif, la température de ladite eau à une valeur comprise entre 45 et 65°C.

2. Dispositif selon la revendication 1, dans lequel il est prévu, dans une partie d'extrémité amont, une zone (46) d'élimination de la terre, formée et agencée de manière à nettoyer les turbercules, lors de l'utilisation du dispositif.

3. Dispositif selon la revendication 1 ou 2, dans lequel lesdits moyens formant convoyeur possèdent la forme d'une roue (4) possédant des moyens formant paroi d'extrémité annulaire, extérieure du point de vue axial, et des moyens formant paroi (15), extérieurs du point de vue radial, et une pluralité de moyens formant paroi (12) définissant des compartiments s'étendant d'une manière générale radialement, servant à définir une pluralité de compartiments (13) destinés à retenir les tubercules et disposés circonférentiellement entre lesdits moyens formant paroi d'extrémité annulaire et lesdits moyens formant paroi (15), extérieurs du point de vue radial, et comportant des moyens formant paroi (16), intérieurs du point de vue radial et formés et agencés de manière à retenir lesdits tubercules à l'intérieur desdits compartiments entre lesdits postes de chargement et de déchargement (23, 27), tout en permettant une entrée et une sortie respectivement dans lesdits postes (23, 27).

4. Dispositif selon la revendication 3, dans lequel lesdits moyens formant paroi, intérieurs du point de vue radial, sont montés de façon fixe de manière à s'étendre le long de la périphérie, intérieure du point de vue radial, de la roue entre lesdits postes de chargement et de déchargement (23, 27), tout en étant en contact avec glissement contre ladite roue (3).

5. Dispositif selon l'une quelconque des revendications 1 à 4, dans lequel les moyens (32, 20, 8) de commande de l'entraînement du convoyeur incluent des moyens (31) formant capteur de température, formés et agencés de manière à contrôler d'une manière sensiblement continue, en cours d'utilisation, la température de l'eau pendant le déplacement des tubercules (22) dans cette eau, et sont agences de maniere a modifier la vitesse des moyens formant convoyeur (3) selon une relation prédéterminée et proportionnelle à la température, le temps de transit des tubercules (22) étant modifié d'une manière inversement proportionnelle à ladite température.

6. Dispositif selon la revendication 1 ou 2, dans lequel lesdits moyens formant convoyeur sont constitués par un convoyeur du type vibrant comportant un dispositif d'entraînement en vibrations, servant à faire vibrer lesdits moyens de support des tubercules, et une voie de transport, et formé et agencé de telle sorte que les tubercules sont entraînés le long de ladite voie, sous l'influence du poids des tubercules (22) pénétrant dans ladite voie au niveau dudit poste de chargement (23), pendant le fonctionnement dudit dispositif d'entraînement en vibrations.

7. Dispositif selon l'une quelconque des revendications 1 à 6, dans lequel lesdits moyens de commande de la température sont formés et agencés de manière à maintenir, lors de l'utilisation du dispositif, la température de ladite eau à une valeur comprise entre 50 et 65°C.

8. Procédé pour traiter le piétin-échaudage des tubercules de pommes de terre, incluant les étapes consistant à: classer les tubercules de pommes de terre (22) en fonction de leur taille, amener les tubercules de pommes de terre (22), classés en fonction de leurs tailles et possédant une taille similaire, à une température égale ou inférieure à la température ambiante, jusqu'à une zone de traitement thermique (10); introduire lesdits tubercules dans un volume de fluide de traitement thermique possédant une capacité thermique nettement supérieure à celle desdits tubercules introduits (22) de manière que lesdits tubercules introduits aient un effet sensiblement négligeable sur la température dudit fluide, qui est comprise entre 45 et 65°C, afin que le fluide entoure sensiblement complètement les tubercules individuels, et maintenir lesdits tubercules dans ledit fluide pendant un intervalle de temps suffisant pour détruire, pour l'essentiel, l'organisme du piétin-échaudage sans aucun endommagement important du tissu des tubercules; retirer lesdits tubercules dudit fluide et les amener dans une zone de refroidissement.

9. Procédé selon la revendication 8, selon lequel ledit fluide est à une température comprise entre 50 et 60°C.

10. Procédé selon la revendication 8 ou 9, incluant les étapes consistant à introduire lesdits tubercules dans un fluide de refroidissement à une température égale ou inférieure à la température ambiante, dans ladite zone de refroidissement, de manière que ledit fluide de refroidissement entoure essentiellement complètement les tubercules individuels, de manière à les refroidir rapidement à une température égale ou inférieure à la température ambiante, et retirer lesdits tubercules de ladite zone de refroidissement.

11. Procédé selon l'une quelconque des revendications 8 à 10, dans lequel les tubercules sont immergés dans un fluide aqueux de traitement thermique, pendant l'intervalle de temps compris entre 30 secondes à une température avoisinant 65°C et 10 minutes à une température avoisinant 50°C.

12. Procédé selon l'une quelconque des revendications 8 à 11, selon lequel le traitement thermique est exécuté dans des conditions de température et de temps telles que sensiblement seule la zone extérieure, extravasculaire, du tubercule, est chauffée.

13. Procédé selon l'une quelconque des revendications 8 à 12, selon lequel le traitement thermique est exécuté dans des conditions de température et de temps telles que l'aptitude à la germination du tubercule n'est sensiblement pas perturbée.

**FIG.1**

**FIG.2**

FIG.3

FIG.4

2